# FASCICULE DE BREVET EUROPEEN

(11) **EP 2 834 605 B1**
(45) Date de publication et mention de la délivrance du brevet: **11.03.2020**
(21) Numéro de dépôt: 13715337.5
(22) Date de dépôt: 15.03.2013
(51) Int. Cl.: G01F 23/00

(54) **PROCEDE D'ESTIMATION DE LA QUANTITE DE FLUIDE D'UN RESERVOIR DE FLUIDE CONSOMMABLE D'UN VEHICULE AUTOMOBILE**
VERFAHREN ZUR SCHÄTZUNG DER FLUIDMENGE EINES VERBRAUCHSFLUIDBEHÄLTERS EINES KRAFTFAHRZEUGS
METHOD OF ESTIMATING FLUID QUANTITY OF A CONSUMABLE FLUID RESERVOIR OF A MOTOR VEHICLE

(30) Priorité: 04.04.2012 FR 1253087
(43) Date de publication de la demande: 11.02.2015
(73) Titulaire: PSA Automobiles SA, 78300 Poissy (FR)
(72) Inventeur: LEE, Eric, F-94100 St Maur Des Fosses (FR); SABY, Marie-pierre, F-78990 Elancourt (FR)
(86) Numéro de dépôt international: PCT/FR2013/050556
(87) Numéro de publication internationale: WO 2013/150202

(56) Documents cités:
- FR-A1- 2 495 767
- JP-A- 2000 162 017

## Description

L'invention concerne l'estimation d'une quantité de fluide consommable, notamment d'un liquide, dans un réservoir d'un véhicule de type véhicule automobile.

Dans un véhicule, il est utile de connaître la quantité de liquide contenue dans les réservoirs. Cela permet d'anticiper les situations de manque mais également d'obéir à certains besoins réglementaires.

Ainsi, le jaugeage de certains fluides, par exemple le carburant, impose une évaluation en continu, et le réservoir doit être rempli relativement fréquemment pour assurer la mobilité du véhicule.

Le document FR2495767, dont la problématique est de mettre au point une jauge qui interrompt les signaux du capteur de niveau de liquide quand le véhicule accélère ou est incliné, décrit un procédé d'estimation de la quantité de fluide d'un réservoir de fluide consommable d'un véhicule automobile équipé d'au moins un moyen de mesure de ladite quantité. Il propose de plus de faire une moyenne sur un signal filtré par un condensateur.

Le document JP 2000 162017 décrit un procédé d'estimation de la quantité de fluide d'un réservoir de fluide consommable d'un véhicule automobile équipé d'au moins un moyen de mesure de ladite quantité. JP 2000 162017 propose d'effectuer une moyenne sur une durée spécifiée, cette durée étant variable selon que le moteur est à l'arrêt ou en rotation.

Dans le cas d'un fluide de fonction différente, n'intervenant pas directement dans la production de force motrice pour le véhicule, il peut s'agir plutôt de détecter que le niveau de fluide est supérieur à un seuil donné, afin de garantir le fonctionnement correct et réglementaire du véhicule. Il peut s'agir notamment d'un fluide intervenant dans le traitement des gaz d'échappement, comme un liquide contenant de l'urée en tant que précurseur d'ammoniac pour alimenter un dispositif de réduction des NOx dans les gaz d'échappement. Il peut aussi s'agir, par exemple, d'un réservoir d'additif pour carburant qui n'est ajouté que périodiquement et en faibles quantités au carburant, comme un fluide d'additif pour améliorer l'efficacité des filtres à particules. Dans ces cas, la consommation est faible et le remplissage se fait de façon espacée, et généralement lors de visites de contrôle du véhicule.

Plus particulièrement pour ce type de fluide, on a donc besoin de vérifier périodiquement que le niveau de fluide dans le réservoir est bien au-delà d'un seuil prédéterminé. Mais il est nécessaire de s'assurer de la fiabilité des mesures : s'il est nécessaire d'alerter le conducteur du véhicule sur l'autonomie restante du véhicule, notamment à traduire en kilométrage restant, quand le niveau de fluide s'approche ou descend en deçà du seuil prédéterminé, il convient aussi de ne pas le pénaliser en générant des fausses alertes.

Or, avec les moyens de mesure du type jauge disponibles, et notamment quand celles-ci ne sont pas actives sur tout le volume délimité par le réservoir, la mesure du niveau de fluide mesuré est sujette à diverses imprécisions, outre celles intrinsèques à la jauge elle-même, et ceci même quand le véhicule est à l'arrêt : ainsi, le véhicule peut ne pas se trouver à l'horizontale (véhicule à l'arrêt sur un sol en pente selon l'axe longitudinal et/ou selon l'axe transversal du véhicule), ou encore être bien à l'arrêt mais avec le fluide encore en mouvement dans le réservoir. Il peut être envisageable de mesurer l'horizontalité du véhicule lors des mesures afin de corriger celles-ci en conséquence, par exemple à l'aide de capteurs dédiés, quoique cette solution puisse apparaitre comme couteuse. Il est aussi possible de détecter quand le véhicule est à l'arrêt, par exemple en exploitant les informations du système de contrôle commande du moteur, afin de déclencher les mesures uniquement à l'arrêt. Mais il est plus délicat de prendre en compte la dynamique du mouvement de fluide dans le réservoir quand le véhicule est à l'arrêt, car elle dépend notamment de la vitesse et de la trajectoire du véhicule avant son arrêt.

L'invention a alors pour but d'améliorer la fiabilité des mesures de fluide consommable dans un réservoir de véhicule. Elle cherche notamment à améliorer la précision des mesures sans complexifier la mise en œuvre desdites mesures, notamment en évitant d'ajouter des dispositifs supplémentaires à ceux utilisés pour mesurer les niveaux de fluide dans lesdits réservoirs.

L'invention a pour objet un procédé d'estimation de la quantité de fluide d'un réservoir de fluide consommable d'un véhicule automobile et équipé d'au moins un moyen de mesure de ladite quantité, notamment du type jauge, tel que ledit procédé comporte l'établissement d'une moyenne glissante sur des mesures de quantité de fluide par ledit moyen lors d'une pluralité de phases d'arrêt successives du véhicule.

De préférence, on établit plusieurs mesures pour chaque phase d'arrêt considérée du véhicule.

L'invention minimise ainsi les imprécisions de mesure par la combinaison de différents moyens. D'une part, on choisit de faire les mesures quand le véhicule est à l'arrêt (qu'il y ait ou non arrêt du moteur), sachant que la détection des arrêts se fait avec les données du système de commande du moteur du véhicule, sans dispositifs supplémentaires, en augmentant ainsi la fiabilité des mesures qui se font en statique. D'autre part, on réalise une moyenne glissante, qui permet de lisser les résultats et d'en augmenter la fiabilité, sans avoir nécessairement recours à une mesure de l'horizontalité du véhicule : les imprécisions de mesure dues aux variations d'inclinaison du véhicule peuvent ainsi, au moins en partie, être atténuées.

Enfin, de préférence, on va faire plusieurs mesures à chaque arrêt, de façon à pouvoir les moyenner pour chaque arrêt et/ou choisir les valeurs pertinentes pour chaque arrêt, à savoir les valeurs les plus proches du niveau réel de fluide dans le réservoir. En faisant plusieurs mesures dans l'intervalle de temps de la phase d'arrêt considérée, on va en effet obtenir, au début de cet intervalle, des valeurs de mesure plus ou moins fortement perturbées par le mouvement du fluide dans le réservoir. Puis, le niveau de fluide dans le réservoir tend à se stabiliser. Et c'est à partir d'une certaine période de temps dans cet intervalle, aléatoire suivant la vitesse et la trajectoire du véhicule antérieurement à son arrêt, que les mesures deviennent plus fiables. On a donc intérêt, selon l'invention, à faire des mesures en continues ou en discontinu sur tout l'intervalle de temps de la phase d'arrêt, et, ensuite, à discriminer les valeurs obtenues selon leur temps de stabilisation. Concrètement, cette stabilisation peut se détecter dès que deux mesures consécutives présentent une différence de valeur inférieure à une tolérance prédéterminée par exemple.

Avantageusement, on écarte les valeurs de mesure non pertinentes pour chaque phase d'arrêt considérée, valeurs, qui, comme expliqué plus haut, auront tendance à se situer au voisinage du début de l'intervalle de temps de l'arrêt.

On peut d'ailleurs choisir de ne faire de mesures qu'après un certain temps, prédéterminé, une fois qu'il y a eu détection que le véhicule est à l'arrêt.

Avantageusement, on conserve la ou les valeurs pertinentes pour chaque phase d'arrêt considérée, qui correspondent à des valeurs de niveau de fluide stabilisé dans le réservoir. Concrètement, quand le moyen de mesure est une jauge, les valeurs mesurées vont osciller sur une certaine amplitude, puis se stabiliser, les valeurs stabilisées étant seules conservées pour être moyennées. De fait, la valeur la plus pertinente, la plus stabilisée, est celle qui est en toute fin de l'intervalle de temps de la phase d'arrêt, fin que l'on ne peut identifier qu' a posteriori, quand le véhicule est reparti.

De préférence, on moyenne donc les mesures pertinentes pour chaque phase d'arrêt considérée pour obtenir une valeur de mesure retenue par phase d'arrêt.

Pour assurer une fiabilité raisonnable de l'estimation selon l'invention, on préconise de réaliser la moyenne glissante des mesures sur au moins 10, notamment au moins 100, phases d'arrêt successives du véhicule.

Avantageusement, on prend également en compte la quantité de fluide consommée lors d'une phase de roulage entre phases d'arrêt. En effet, il est naturellement normal que le niveau de fluide consommable diminue progressivement dans le réservoir, et cette diminution progressive n'est pas à considérer comme une imprécision.

On peut aussi prendre en compte une détection du remplissage du réservoir en fluide (par exemple en détectant l'actionnement du système d'obturation du réservoir tel qu'une ouverture de bouchon, ou en détectant l'introduction d'un pistolet de remplissage dans le réservoir). On peut alors prévoir de réinitialiser la réalisation de la moyenne glissante selon l'invention quand un remplissage est détecté, une fois celui-ci achevé (la détection de la fin du peut se faire en détectant la fermeture d'un bouchon de remplissage du réservoir, ou la mise en mouvement du véhicule, ou le redémarrage de moteur à thermique du véhicule).

Avantageusement, le procédé selon l'invention prévoit un déclenchement d'une alerte quand la moyenne glissante estime la quantité de fluide à un niveau inférieur ou égal à un seuil prédéterminé. Cette alerte peut être visuelle, sonore, être un affichage alphanumérique au niveau du tableau de bord avertissant le conducteur quand un seuil est franchi ou du nombre de kilomètres restants à parcourir avant de remplir le réservoir ...

Le procédé selon l'invention est particulièrement adapté pour estimer les quantités restantes d'un fluide consommable choisi parmi au moins un des fluides suivants : carburant pour un moteur de type thermique, fluide destiné à alimenter un dispositif de dépollution sur la ligne d'échappement du véhicule, notamment de type dispositif de réduction des émissions des NOx, ou encore additif de carburant (stocké dabs un réservoir auxiliaire en connexion fluidique avec le réservoir de carburant), ou encore autres fluides comme l'huile moteur.

D'autres buts, avantages et caractéristiques de l'invention apparaîtront dans la description qui suit d'un exemple de réalisation, non limitatif de l'objet et de la portée de la présente demande de brevet, accompagnée de dessins dans lesquels :
- la figure 1 est une représentation schématique des mesures par une jauge d'un niveau de fluide dans un réservoir embarqué dans un véhicule automobile en phase d'arrêt devant un feu de signalisation routière, et des mesures retenues selon l'invention,
- la figure 2 est une représentation schématique de la façon dont on réalise une moyenne glissante selon l'invention, à partir des mesures réalisées sur des phases d'arrêt successives du type de celles selon la figure 1.

L'exemple choisi pour illustrer le procédé selon l'invention concerne un réservoir d'urée en phase aqueuse (ou tout autre précurseur d'agent réducteur du type ammoniac) stocké dans un réservoir monté dans un véhicule automobile équipé d'un moteur thermique. Le réservoir, de façon connue, est en connexion fluidique avec la ligne d'échappement du moteur thermique, de façon à ce que cette solution se vaporise et soit entraînée avec les gaz d'échappement dans un catalyseur de réduction des NOx (appelé aussi dispositif de SCR pour « Selective Catalytic Réduction »). Ce réservoir a une contenance d'environ 10 à 20 litres de solution aqueuse, qui permet de donner au véhicule une autonomie d'au moins 10 000 km, et notamment d'au moins 20 000 km. Ce réservoir n'est donc rempli que rarement, lors d'une visite de contrôle du véhicule dans un garage généralement. Le conducteur a donc seulement besoin d'être averti, entre deux révisions de son véhicule, si le niveau de solution dans le réservoir descend en deçà d'un seuil prédéterminé.

Selon l'invention, on équipe le réservoir d'une jauge du type usuellement utilisée pour mesurer les niveaux de liquide dans les réservoirs, et qui équipe déjà les réservoirs de carburant.

Or l'estimation du volume par la jauge n'est pas jugée suffisamment précise, d'autant plus que cette estimation est perturbée par la dynamique du véhicule en roulage et par différents paramètres variables comme le positionnement spatial du véhicule lors des mesures par la jauge (horizontalité ou non du véhicule).

L'invention propose donc d'améliorer la précision de l'information obtenue par la jauge en réalisant un traitement statistique des données obtenues par la jauge, associées aux conditions de roulage du véhicule : elle propose de réaliser une moyenne mobile/glissante sur de nombreuses données de la jauge lorsque la vitesse du véhicule est nulle.

Le procédé d'estimation du niveau d'urée dans le réservoir est réalisé par une unité de contrôle connectée à l'unité de contrôle commandant le moteur du véhicule, ou intégrée à celle-ci et connectée à la jauge du réservoir d'urée.

La première étape du procédé consiste à mémoriser le niveau d'urée mesuré par la jauge quand la vitesse du véhicule est nulle. L'arrêt du véhicule est déterminé par l'unité de contrôle commande du moteur. A noter que, dans l'invention, on vise l'arrêt, c'est-à-dire une vitesse du véhicule nulle, que le moteur thermique soit arrêté ou non. Suivant les conditions de roulage précédent l'arrêt du véhicule, le niveau d'urée mesuré va être plus ou moins stable au plus de plus ou moins longtemps.

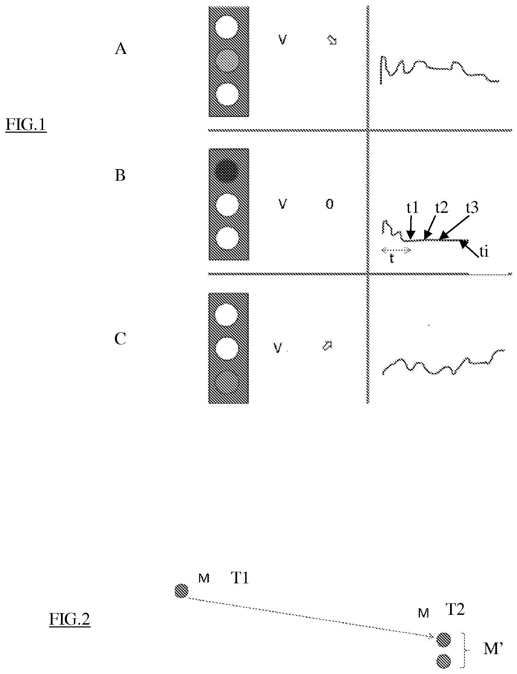

Ainsi, comme représenté très schématiquement à la figure 1, quand un véhicule s'arrête à un feu rouge, on peut distinguer trois phases : la phase A où le feu est orange, et où la vitesse V du véhicule décroît, la phase B où le véhicule s'est arrête au feu rouge, où sa vitesse est donc nulle, et la phase C où le feu passe au vert et où le véhicule démarre, sa vitesse se mettant à croire. Les niveaux d'urée mesurés par la jauge en continu et correspondant aux trois phases sont montrés sous forme d'un graphe : on voit, comme attendu, que les niveaux d'urée mesurés pendant les phases A et C sont très oscillants et difficiles à exploiter. Et pendant la phase B d'arrêt, on va avoir une première période de temps t de durée variable selon les conditions de roulage antérieurs, où le niveau mesuré va plus ou moins fortement osciller. Puis au-delà de cette période t, le niveau mesuré va se stabiliser. Le niveau de stabilisation acceptable, à savoir le niveau que l'on va considérer suffisamment stable pour conserver la mesure, est à déterminer à l'avance : on peut fixer une différence inférieure à un seuil donné entre deux mesures faites dans un intervalle de temps donné. Quand cette stabilité est obtenue au-delà de la période t, les mesures seront considérées pertinentes. Soit on va moyenner les différentes valeurs mesurées à l'instant t1,t2,t3 etc.... pour garder une valeur pertinente moyenne pour l'arrêt considéré, soit on conservera la dernière valeur mesurée à l'instant ti juste avant le démarrage du véhicule.

Cette première étape permet donc d'enregistrer une valeur de niveau pour un arrêt donné. Elle est réitérée une pluralité de fois, de préférence sur des arrêts successifs.

La deuxième étape consiste à réaliser une moyenne glissante en exploitant ces valeurs enregistrées, au fur et à mesure de leur acquisition, sur un nombre élevé d'arrêts, par exemple sur au moins 100 ou 200 arrêts (nombre déterminé au départ, ou qui peut être adapté selon les conditions de roulage : beaucoup d'arrêts successifs ou très peu d'arrêts successifs sur une période de temps donné, sans arrêt moteur par exemple). Par ailleurs, durant un roulage, de l'urée est consommée, et il est nécessaire de corriger le niveau d'urée pris en compte pour la mesure de la quantité d'urée consommée.

Comme symbolisé à la figure 2, on a donc l'établissement de moyennes mobiles, par exemple l'une MT1 à un instant T1, la suivante MT2 à un instant T2, l'introduction d'une nouvelle valeur de mesure venant modifier la valeur de la moyenne mobile de M en M'.

Ensuite, dès que la moyenne mobile obtenue descend en dessous d'un seuil, on prévoit qu'une alarme se déclenche pour avertir le conducteur. On peut prévoir deux seuils : un premier qui est une simple information, avec éventuellement l'estimation du nombre de kilomètres restant avant d'avoir à remplir le réservoir, et un second seuil, critique, où le conducteur doit remplir le réservoir dès que possible. Il est aussi possible d'avertir en continu le conducteur du kilométrage restant avant le remplissage par un niveau de jauge au niveau du tableau de bord, avec une alerte qui se déclenche en dessous d'un seuil donné.

L'invention peut s'appliquer à l'estimation de la quantité restant de tout fluide consommable dans un réservoir embarqué sur le véhicule.

Ne conserver ainsi que les mesures où le niveau de fluide (dans l'exemple de l'urée) dans le réservoir est stable revient à retirer des imprécisions de la mesure (comme la précision intrinsèque de la jauge, le positionnement spatial du véhicule ...) celles liées à la dynamique du véhicule. De plus, l'établissement du moyenne glissante (dite aussi moyenne mobile) est hérité de la loi des grands nombres, de convergences classiques que l'on utilise par exemple dans la méthode dite de Monte-Carlo : plus le nombre de points pris pour établir la moyenne glissante est important, plus la convergence vers la valeur réelle est correcte, et donc plus l'estimation faite est précise.

Le procédé selon l'invention est donc économe en moyens de mise en œuvre, puisqu'il utilise des moyens d'estimation de niveau de fluide dans un réservoir, du type jauge, déjà présents, et un traitement des données de mesure par une unité de contrôle déjà présente également. Il permet d'augmenter significativement la fiabilité des mesures, tout en réduisant le nombre de mesures à prendre, puisqu'on sélectionne certaines des valeurs mesurées uniquement à l'arrêt du véhicule. (On peut bien sûr prendre les mesures en permanence, mais on ne considère que celles prises à l'arrêt). Il permet d'éviter l'émission de fausses alertes au conducteur.

L'invention est économe, car elle n'utilise pas de moyens de mesure de l'assiette du véhicule: avec le procédé de l'invention, on prend aussi en compte les valeurs de jaugeage du réservoir même si le véhicule à l'arrêt est incliné, tant que la valeur obtenue n'est pas aberrante. C'est le traitement statistique des valeurs mesurées qui permet d'aboutir à une mesure fiable de la quantité de fluide restante dans le réservoir : A titre d'illustration, le procédé selon l'invention procède à des milliers, et même des dizaines de milliers de points de mesure.

Le procédé selon l'invention permet de déterminer la moyenne pondérée de la consommation en fluide du véhicule, et ceci en continu, quelle que soit l'assiette du véhicule, ce qui est extrêmement avantageux.

## Revendications

1. Procédé d'estimation de la quantité de fluide d'un réservoir de fluide consommable d'un véhicule automobile et équipé d'au moins un moyen de mesure de ladite quantité, notamment du type jauge, **caractérisé en ce qu'**il comporte l'établissement d'une moyenne glissante sur des mesures de quantité de fluide par ledit moyen lors d'une pluralité de phases d'arrêt successives du véhicule.

2. Procédé selon la revendication précédente, **caractérisé en ce que** l'on établit plusieurs mesures pour chaque phase d'arrêt considérée du véhicule.

3. Procédé selon la revendication précédente, **caractérisé en ce qu'**on écarte les valeurs de mesure non pertinentes pour chaque phase d'arrêt considérée.

4. Procédé selon l'une des revendications 2 ou 3, **caractérisé en ce qu'**on conserve la ou les valeurs pertinentes pour chaque phase d'arrêt considérée, qui correspondent à des valeurs de niveau de fluide stabilisé dans le réservoir.

5. Procédé selon l'une des revendications précédentes, **caractérisé en ce qu'**on moyenne les mesures pertinentes pour chaque phase d'arrêt considérée pour obtenir une valeur de mesure retenue par phase d'arrêt.

6. Procédé selon l'une des revendications précédentes, **caractérisé en ce que** la moyenne glissante est réalisée sur des mesures sur au moins 10, notamment au moins 100, phases d'arrêt successives du véhicule.

7. Procédé selon l'une des revendications précédentes, **caractérisé en ce qu'**on prend en compte la quantité de fluide consommée lors d'une phase de roulage entre phases d'arrêt.

8. Procédé selon l'une des revendications précédentes, **caractérisé en ce qu'**on prend en compte une détection du remplissage du réservoir en fluide.

9. Procédé selon l'une des revendications précédentes, **caractérisé en ce qu'**il prévoit un déclenchement d'une alerte quand la moyenne glissante estime la quantité de fluide à un niveau inférieur ou égal à un seuil prédéterminé.

10. Procédé selon l'une des revendications précédentes, **caractérisé en ce que** le fluide consommable est choisi parmi au moins un des fluides suivants : carburant pour un moteur de type thermique, fluide destiné à alimenter un dispositif de dépollution sur la ligne d'échappement du véhicule, notamment de type dispositif de réduction des émissions des NOx, ou encore additif de carburant.

## Patentansprüche

1. Verfahren zur Schätzung der Fluidmenge eines Verbrauchsfluidbehälters eines Kraftfahrzeugs und ausgestattet mit mindestens einem Mittel zum Messen der Menge, insbesondere vom Typ Standanzeiger, **dadurch gekennzeichnet, dass** es das Ermitteln eines gleitenden Mittelwerts auf Fluidmengenmessungen durch das Mittel bei einer Vielzahl aufeinanderfolgender Stoppphasen des Fahrzeugs umfasst.

2. Verfahren nach dem vorstehenden Anspruch, **dadurch gekennzeichnet, dass** mehrere Messungen für jede betreffende Stoppphase des Fahrzeugs ermittelt werden.

3. Verfahren nach dem vorstehenden Anspruch, **dadurch gekennzeichnet, dass** Messwerte, die nicht für jede betreffende Stoppphase relevant sind, verworfen werden.

4. Verfahren nach einem der Ansprüche 2 oder 3, **dadurch gekennzeichnet, dass** der oder die relevanten Werte für jede betreffende Stoppphase, die Pegelwerten des in dem Tank stabilisierten Fluids entsprechen, behalten werden.

5. Verfahren nach einem der vorstehenden Ansprüche, **dadurch gekennzeichnet, dass** die relevanten Messungen für jede betreffende Stoppphase zum Erhalten eines Messwerts, der pro Stoppphase behalten wird, gemittelt wird.

6. Verfahren nach einem der vorstehenden Ansprüche, **dadurch gekennzeichnet, dass** der begleitende Mittelwert auf Messungen auf mindestens 10, insbesondere mindestens 100 sukzessiven Stoppphasen des Fahrzeugs ausgeführt wird.

7. Verfahren nach einem der vorstehenden Ansprüche, **dadurch gekennzeichnet, dass** die Fluidmenge, die während einer Fahrphase zwischen Stoppphasen verbraucht wird, berücksichtigt wird.

8. Verfahren nach einem der vorstehenden Ansprüche, **dadurch gekennzeichnet, dass** ein Erfassen des Füllens des Fluidtanks berücksichtigt wird.

9. Verfahren nach einem der vorstehenden Ansprüche, **dadurch gekennzeichnet, dass** es ein Auslösen einer Warnung vorsieht, wenn der gleitende Mittelwert die Fluidmenge an einem Pegel kleiner oder gleich einem vorbestimmten Schwellenwert schätzt.

10. Verfahren nach einem der vorstehenden Ansprüche, **dadurch gekennzeichnet, dass** das Verbrauchsfluid aus mindestens einem der folgenden Fluide ausgewählt wird: Kraftstoff für eine Brennkraftmaschine, Fluid, das zum Versorgen einer Nachbehandlungsvorrichtung auf dem Abgasstrang eines Fahrzeugs, insbesondere vom Typ Vorrichtung zur Reduktion der NOx-Emissionen oder auch Kraftstoffzusatzstoff ausgewählt wird.

## Claims

1. A method of estimating fluid quantity of a consumable fluid reservoir of a motor vehicle and equipped with at least one means for measuring said quantity, in particular of the gauge type, **characterized in that** it comprises the establishing of a sliding average on measurements of fluid quantity by said means during a plurality of successive stop phases of the vehicle.

2. The method according to the preceding claim, **characterized in that** several measurements are established for each stop phase concerned of the vehicle.

3. The method according to the preceding claim, **characterized in that** the non-pertinent measurement values are eliminated for each stop phase concerned.

4. The method according to one of Claims 2 or 3, **characterized in that** the pertinent value or values are retained for each stop phase concerned which correspond to stabilised fluid level values in the reservoir.

5. The method according to one of the preceding claims, **characterized in that** the pertinent measurements are averaged for each stop phase concerned, to obtain a retained measurement value per stop phase.

6. The method according to one of the preceding claims, **characterized in that** the sliding average is realized on measurements over at least 100, in particular at least 100, successive stop phases of the vehicle.

7. The method according to one of the preceding claims, **characterized in that** the quantity of fluid is taken into account which is consumed during a running phase between stop phases.

8. The method according to one of the preceding claims, **characterized in that** a detection of the filling of the reservoir with fluid is taken into account.

9. The method according to one of the preceding claims, **characterized in that** it provides a triggering of a warning when the sliding average estimates the quantity of fluid at a level lower than or equal to a predetermined threshold.

10. The method according to one of the preceding claims, **characterized in that** the consumable fluid is selected from at least one of the following fluids: fuel for an engine of the heat type, fluid intended to supply a depollution device on the exhaust line of the vehicle, in particular of the device type for reduction of NOx emissions, or else fuel additive.
